# EUROPEAN PATENT APPLICATION

(11) **EP 4 675 903 A1**
(43) Date of publication of application: **07.01.2026**
(21) Application number: 25181701.1
(22) Date of filing: 10.06.2025
(51) Int. Cl.: H02M 1/00, H02M 1/08, H02M 1/14, H02M 1/38, H02M 1/44, H02M 3/158

(54) **A CURRENT CONTROLLED BUCK REGULATOR CIRCUIT AND CORRESPONDING CONTROL METHOD**

(30) Priority: 01.07.2024 IT 202400015151
(71) Applicant: STMicroelectronics International N.V., 1228 Plan-les-Ouates, Geneva (CH)
(72) Inventor: ERRICO, Nicola, 20017 Rho (Milano) (IT); GAUDIANO, Rossella, 20018 Sedriano (Milano) (IT); FINAZZI, Luca, 24020 Villa di Serio (Bergamo) (IT); FERRARA, Enrico, 20010 Milano (IT); FLORIANI, Ivan, 28012 Cressa (Novara) (IT)
(74) Representative: Buzzi, Notaro & Antonielli d'Oulx S.p.A.

(57) **Abstract**

A current controlled buck regulator circuit (10; 100; 200),
comprising a half bridge (20; 20') comprising a high side switch (21; 21a, 21b) and a low side switch (22), driven by a PWM signal (PWM_cmd) through respective drivers (41, 42; 141, 142),
comprising a pair of drivers (41, 42; 141, 142) both coupled to a given switch among said high side switch (21; 21a, 21b) and low side switch (22) to supply selectively a first driving current (Ia) and a second driving current (Ib) to said given switch (21; 21a, 21b), enabling selectively said first (Ia) and/or second (Ib) driving current to supply a current switching on said given switch (21; 21a, 21b), the value of an ON current (HS_I) passing through said given switch (21; 21a, 21b) at the switch-on depending on which of said first (Ia) and/or second (Ib) driving current is enabled,
a timing arrangement (141', 142'; 41s', 41b', 42') being configured during the switch-on of said switch (21; 21a, 21b), to enable said first (Ia) and/or second (Ib) driving current so that in said given switch (21; 21a, 21b) passes an ON current (I_{HSon}) with a first value , then after a delay time enabling said first and/or second driving current so that in said given switch (21; 21a, 21b) passes an ON current (I_{HSon}) with a second value greater than said first value.

## Description

### Technical field

The description relates to a current controlled buck regulator, in particular a peak current controlled buck regulator, comprising a half bridge comprising a high side switch and a low side switch, in particular power MOSFETS, driven by a PWM signal through respective drivers.

One or more embodiments may be applied e.g. to DC/DC current control regulators, in particular for automotive microprocessors.

### Technological background

A buck regulator with peak current mode control (PCMC) is a type of switching DC-DC regulator that regulates the output voltage by modulating the current based on its peak value. Also, dually, a buck regulator may be controlled on the valley value of the current, in a valley current controlled mode. Also other current mode control are possible for a switching DC-DC regulator.

In general a buck regulator with PCMC is a buck regulator comprising a half bridge with a high side switch and a low side switch, e.g. power MOSFETs, driven by a PWM (Pulse Width Modulation) signal, which modulation is controlled by a feedback loop coupled to the output of the half bridge, configured to keep the regulated voltage at the output of the half bridge to a reference voltage value. The feedback loop comprises an outer loop, from the regulator output voltage compared with the reference voltage, then in an inner loop the error of the outer loop is transformed in a sense voltage and compared with a voltage drop across the power FET corresponding to the selected switch, e.g. high side switch.

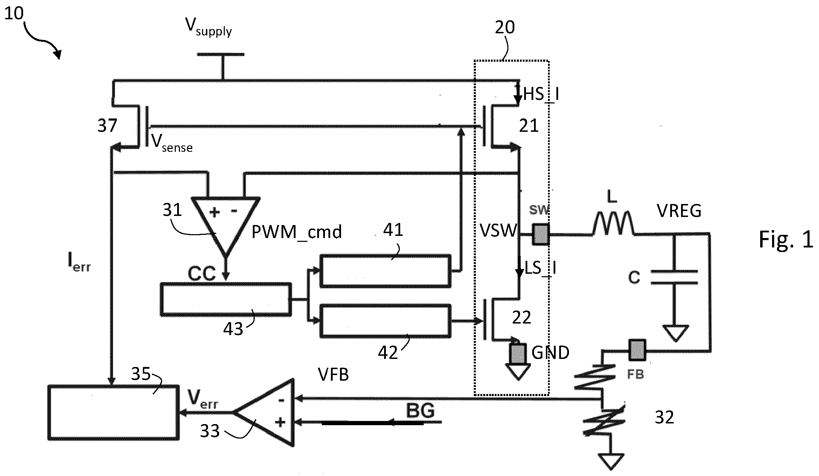

To this regard, the block diagram in figure 1 shows a simplified model of a peak current controlled buck regulator circuit, in which basically an error-amplifier (the outer loop with error amplifier 33) regulates a voltage control signal in order to keep a feedback voltage as much similar to a reference one. The voltage error is converted to a current error (converter 35) and used to generate a voltage drop on a sense-FET 37. A further comparator 31 compares such voltage drop Vₛₑₙₛₑ with a voltage drop across a power-FET of the half bridge of the regulator, in particular the high side switch 21 and its comparison signal CC is used to generate a PWM command PWM_cmd for actuation of the high side and low side drivers of such half bridge. The comparator 31, although it compares voltages, performs thus a check whether the current through the sense FET 37 reaches a level indicated by the control variable.

To this regard, in figure 1 in particular it is shown a peak current controlled buck regulator circuit 10, which includes a half bridge 20 configuration of switches, comprising a high side switch 21 embodied by a MOSFET, in particular power MOSFET, transistor, coupled between a power supply, V_{supply}, and an output node SW of the half bridge 20, and a low side switch 22 embodied by a respective power MOSFET transistor, coupled between such output node SW and ground GND. A low pass filter, represented in the embodiment by a series of an inductor L and a capacitor C coupled to ground GND is coupled to the output node, i.e., switching node SW. A regulated voltage VREG is taken on the node coupling the inductor L, coupled at the other terminal to the output node SW and the capacitor C, to which is also coupled a feedback node FB. A feedback network formed by a divider 32 with an adjustable division ratio is coupled to the node FB to supply a divided regulated voltage to an error amplifier 33, supplying a feedback voltage VFB, e.g., the divided regulated voltage, which is there compared with a reference voltage BG. The resulting voltage error Verr is brought to a voltage to current converter 35. The switches 21 and 22 are driven by respective drivers 41 and 42, high side and low side. A PWM logic 43 supplies a PWM driving signal, PWM_cmd, to each of them. The PWM logic 43 is controlled by a comparison signal CC, i.e. determines the pulse width on the basis of the comparison signal CC value, such comparison signal CC being output by a comparator 36, which compares a voltage error current Ierr from the voltage to current converter 35, with a current taken at the output node SW. A sense FET, 37, coupled by the gate to the high side switch, i.e. MOS FET 21, is coupled to the error current Ierr determining a drop, i.e., sense, voltage Vsense. The current comparator 31 compares the sense voltage Vsense with the voltage drop across the power-FET 21 and generates the PWM command CC for high side and low side drivers actuation. As indicated above the comparator 31 belong to the first outer loop, controlling the regulated voltage VREG value, while the comparator 36 belong to a second inner loop which operates on the voltage drop at e.g. the high side switch 21 and a sense voltage determined by the error current in the first outer loop.

The buck regulator is the main source of emission, indeed, during the switching activity it sinks current spikes from battery line. These spikes can reach high values depending on driver implementation. The current spikes due to bonding and external parasitic (board and cables) can generate emissions. The higher the spikes, the higher the emission level on battery line.

A key parameter to evaluate a switching DC/DC converter such as a buck regulator, is the efficiency. In order to improve the efficiency, especially when the buck regulator operate at high switching frequency f_sw (>=2MHz), the rise and fall time of the switching node SW must be very low to reduce power loss during switching, furthermore the dead time must be very short. By reducing such three parameters emissions increase due to the increase of the spikes. A trade-off between emissions and efficiency should be evaluated in order to obtain a a good switching DC/DC converter.

Regarding how to control the current exchange between the high side 21 and low side 22 MOS FETs during transitions, since the switching regulators are one of the most relevant circuits for emission matter, the current discontinuity during the switching activity, indeed, generates a very fast current variation in time, e.g. di/dt, that causes heavy voltage spike and ringing on the inductive parasitic impedance along the line. This phenomenon leads to conducted emission: the higher the spikes and parasitic, the higher the emission on battery line.

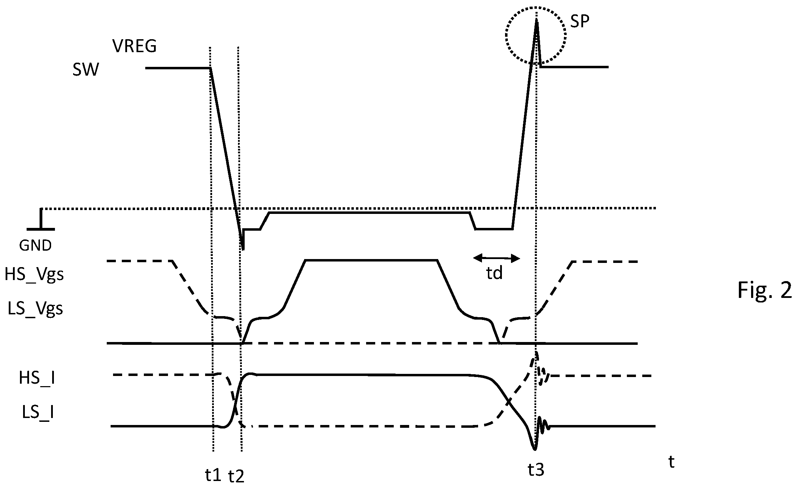

In figure 2 to this regard it is shown in function of the time t the gate source voltage HS_VGS of the high side MOS FET 21, the gate source voltage LS_VGS of the low side FET 22 , the high side current HS_I flowing through the MOSFET 21 in the ON and OFF state and the low side current LS_I flowing in the low side MOSFET 22 in the ON and OFF state, and the voltage VSW at the switching node SW. With GND is indicated the line corresponding to the ground voltage.

As shown when a high side gate source voltage HS_Vgs of the MOSFET 21 is brought down by the corresponding driver 41, the regulated voltage VREG switches at time t1, then the high side gate source voltage HS_Vgs stays constant at a plateau value till the regulated voltage VREG crosses the ground level GND at time t2, then it reaches to a minimum level. In the same time the low side gate source voltage LS_Vgs rises up to the high level, while the regulated voltage VREG after a transient sets to the ground level. When the low side gate source voltage LS_Vgs is brought down to low level and then the high side gate source voltage HS_VGS is brought up by their respective drivers 42 and 41, the regulated voltage VREG presents a dead time t_{d} interval starting substantially when the low side gate source voltage LS_VGS decreasing meets the respective plateau (a current LS_I in the low side MOSFET 22 stars to decrease) and finishing when the high side gate source voltage HS_VGS rising meets its plateau. During this dead time t_{d} interval the regulated voltage VREG drops at a constant voltage value below the ground voltage GND, then at the end of the dead time interval it rises with a fast rise time up to a time t3 where it presents a voltage spike SP above the high voltage level before settling to such level. The longer the dead time td, the higher the amplitude of the spike SP due to the reverse recovery charge of low side MOSFET 22 and the fast rise time of the high side MOSFET 21.

Under this view, a possible simple way to reduce emission is to slow-down the converter by increasing rise, fall time and dead time. This solution has the main drawback to reduce the efficiency.

Another possible way is to implement controlled cross-conduction: by keeping low side MOS in on-state when the high side MOS is switching-on it is possible to remove the dead time before the rise time and avoid current recirculation on MOS diode avoiding the impact of reverse recovery charge effect on emission. Such implementation has the main drawback that it is not possible to optimize the controlled cross-conduction in the whole load current range and the whole IC temperature range, when the load current is low the efficiency is deeply impacted and when the IC temperature is far away from the junction temperature Tj at which the control is optimized the effect is lost causing both reduce of efficiency and emissions.

### Object and summary

An object of one or more embodiments is to contribute in dealing with a number of issues which are recognized to exist in a context as discussed in the foregoing.

According to one or more embodiments that object may be achieved by means of a current controlled buck regulator circuit having the features set forth in the claims that follow.

One or more embodiments may relate to a corresponding control method.

As mentioned previously, various embodiments of the present disclosure regard a current controlled buck regulator circuit, in particular peak current controlled buck regulator circuit,
comprising a half bridge comprising a high side switch and a low side switch, driven by a PWM signal through respective drivers,
comprising a pair of drivers both coupled to a given switch among said high side switch and low side switch (22) to supply selectively a first driving current and a second driving current to said given switch, enabling selectively said first and/or second driving current to supply a current switching on said given switch, the value of an ON current passing through said given switch at the switch-on depending on which of said first and/or second driving current is enabled,
a timing arrangement being configured during the switch-on of said switch, to enable said first and/or second driving current so that in said given switch passes an ON current with a first value, then after a delay time enabling said first and/or second driving current so that in said given switch passes an ON current with a second value greater than said first value.

In variant embodiments, said pair of drivers of the given switch comprises a first driver configured to supply a first driving current to said given switch which is smaller than said second driving current.

In variant embodiments, said timing arrangement comprises a circuit configured to apply a fixed delay to said first driving current and a circuit configured to apply a variable delay to the second driving current, longer than the fixed delay and which value depends on a load current outputted at an output node of said half bridge and on the temperature of the regulator circuit.

In variant embodiments, said circuit configured to apply a variable delay is configured to adjust said variable delay as a function of a delay control current which is proportional to a feedback current, in particular a replica of an error current of a peak current control depending from a load current outputted at a output node of said half bridge and a current depending from the temperature of the circuit, in particular determined by the value of a PTAT, Positive To Absolute Temperature, element.

In variant embodiments, the buck regulator comprises an error-amplifier which output is converted to a current error in function of which the PWM command for actuation of the high side and low side divers of said half bridge is generated, said feedback current being a replica of said error current.

In variant embodiments, said given switch comprises a first and a second sub-switch coupled respectively to the first driving current and second driving current, said first and second sub-switch having different size, in particular different aspect ratio, in the on state at steady state the current flowing through the first sub-switch being greater than the current flowing through the second sub-switch.

In variant embodiments, said timing arrangement comprises a circuit configured to apply a delay to the second driving current till the gate source voltage of the first sub-switch reaches the Miller Plateau, said second driving current being in particular applied as fixed gate current.

In variant embodiments, said timing arrangement comprises a further circuit configured to apply a delay to the activation of a further driving current with a value greater than said the second driving current after said delay, to the second driving current till the gate source voltage of the first sub-switch reaches the Miller Plateau.

In variant embodiments, the given switch is a high side switch.

The solution described herein also refers to a method for controlling a peak current controlled buck regulator circuit according to any of the previous embodiments,
comprising enabling selectively said first and/or second driving current to supply a current switching on said given switch, the value of an ON current passing through said given switch at the switch-on depending on which of said first and/or second driving current is enabled,
enabling during the switch-on of said switch said first and/or second driving current so that in said given switch passes an ON current with a first value, then after a delay time enabling said first and/or second driving current so that in said given switch passes an ON current with a second value greater than said first value.

In variant embodiments, the method comprises supplying a first driving current to said given switch which is smaller than said second driving current, applying a fixed delay to said first driving current and a variable delay to the second driving current, longer than the fixed delay and which value depends on a load current outputted at an output node of said half bridge and on the temperature of the regulator circuit.

In variant embodiments, the method comprises during the OFF to ON transition of said given switch, turning the off the other switch in the half bridge, and, after said fixed delay, turning on said given switch with said first driving current which value is smaller than the second driving current value, determining flowing in the given switch 21 a current with a first value, in the ON state at steady state;
after said variable delay, which is function of the load current of the half bridge and of the temperature of the circuit, driving with both driving currents the given switch, determining flowing in the given switch a current with a second value, in the ON state at steady state t, which is greater than said first value-

In variant embodiments, the method comprises providing as said given switch a switch comprising a first and a second sub-switch coupled respectively to the first driving current and second driving current, said first and second sub-switch having different size, in particular different aspect ratio, in the on state at steady state the current flowing through the first sub-switch being greater than the current flowing through the second sub-switch.

In variant embodiments, the method comprises applying a delay to the second driving current till the gate source voltage of the first sub-switch reaches the Miller Plateau, said second driving current being in particular applied as fixed gate current.

In variant embodiments, the method comprises applying a further delay to the activation of a further driving current with a value greater than said second driving current after the current flowing in the switch comprising a first and a second sub-switch reaches the ON level.

The claims are an integral part of the technical disclosure of the embodiments as provided herein.

### Brief description of the several views in the drawings

One or more embodiments will now be described, by way of example only, with reference to the annexed figures, wherein:
- Figures 1 and 2 have been already described in the foregoing,
- Figure 3 is a partial circuit schematic of a regulator according to a first embodiments,
- Figure 4 is a partial circuit schematic of a regulator according to a second embodiments.
- Figure 5 is signal diagram of signals of the regulator of figure 4.

### Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment. Moreover, particular conformations, structures, or characteristics may be combined in any adequate way in one or more embodiments.

The references used herein are provided merely for convenience and hence do not define the extent of protection or the scope of the embodiments.

The solution here described provides a current controlled buck regulator circuit, in particular peak current controlled buck regulator circuit, comprising a high side switch and a low side switch driven by respective high side and low side driver, in which such buck regulator comprises a control logic of the high side and low side driver configured to smooth the current transition, by splitting the high side driver FET over a pair of drivers, i.e., two parallel drivers, with different current capability. The dead time may be then, for instance, defined by a variable delay proportional with the load current.

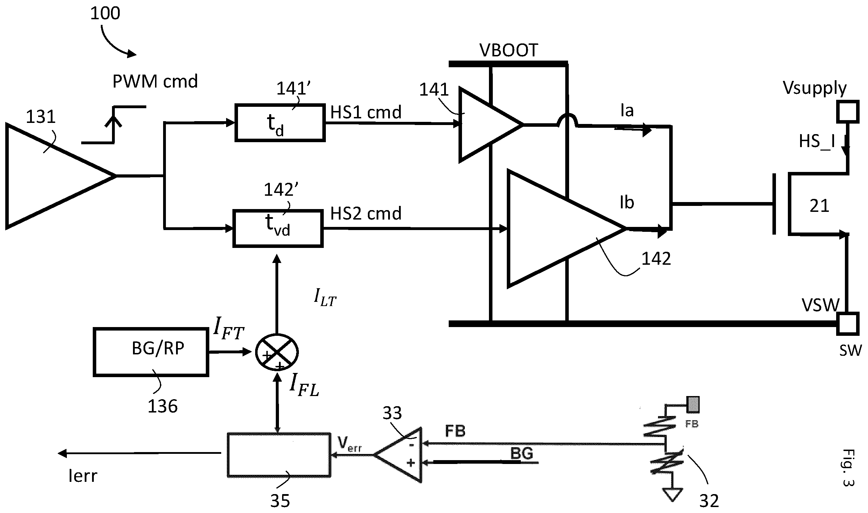

In figure 3 it is described a first embodiment 100 of such a solution. In figure 3 only the portion regarding the high side is shown, the remaining part substantially corresponding to that shown in in figure 1. In particular the regulator 100 may comprise, not shown, a low side switch 22, i.e. power MOSFET, coupled to the output switching node SW. In the figure 3 instead are shown the divider 32, which corresponds to the one of figure 1, coupled to the feedback node FB, the error amplifier 33 and the voltage to current converter 35. From the converter 35 the error current Ierr is shown which is brought back through the PCMC outer loop, i.e. sense FET 37 not shown, to the comparator 131, which in this case represents both the comparator 31 and the PWM logic 43, outputting the PWM command PWM_cmd, of figure 1. Then a replica current of the error current Ierr is also provided by the converter 35 as better explained below.

There are thus provided, in place of a single high side driver, e.g. 41, a first driver 141, with a lower current driving capability, providing a first driving current Ia, and a second driver 142 with a higher current driving capability with respect to the driver 141, providing hence a second driving current Ib smaller than the first driving current Ia, their output paths both coupled to the gate of the high side MOSFET 21, i.e., the control electrode of such switch. A current comparator 131 is shown which output, i.e., its comparison signal, determines the PWM signal PWM_CMD (in figure 1 outputted by the PWM control logic 43), and is sent in parallel to a delay circuit 141' applying a fixed delay t_{d} to the command, i.e., PWM_CMD. at the output of the current comparator 131 before inputting the first driver 141, and in parallel to a variable dead time delay line 142' applying a variable dead time t_{vd}.

As mentioned, the buck regulator 100 in the exemplary embodiment being a peak current controlled buck regulator circuit, includes the feedback elements coupled to the feedback node FB on which the regulated voltage is taken by the divider 32, the error amplifier 33 and the voltage to current converter 35, such components downstream the feedback node FB corresponding to the same components of figure 1. As anticipated, however a feedback current I_{FL} depending from the load current is taken at the output of the voltage to current converter 35, being a replica of the error current Ierr of figure 1, e.g. such feedback current I_{FL} being a replica, for instance obtained by a current mirror of the error current Ierr, and it is summed to a temperature feedback current I_{FT} which value depends from the temperature of the regulator circuit, i.e. the temperature of the integrated circuit implementing the regulator, obtained in the example by using the reference voltage BG, also supplied together with the feedback voltage VFB to the error amplifier 33, divided by a PTAT (Positive To Absolute Temperature) resistance RP in a module 136, to obtain a delay control current I_{LT} to control the value of delay t_{vd} applied by the variable dead time delay circuit 142', which therefore is in the embodiment a current controlled delay line. Therefore the variable dead time tvd depends on the load current, i.e. the current flowing through the output node SW in the load, e.g. L and C like in figure 1, and the circuit temperature. Of course the PTAT element could be also a transistor.

It is submitted that in general delay circuit, e.g. CMOS delay circuit, configured to apply a controlled delay, for instance by a control current, are known per se to the person skilled in the art.

During the OFF to ON transition, which is the most critical, the PWM command PWM_CMD changes from logical zero to logical one, the low side power MOS FET 22, also not shown in figure 3, is turned off with the maximum current capability and, after a fixed delay t_{d} (applied by the delay circuit 141'), the high side power MOSFET 21 is turned on with a limited current capability, i.e., using the driver 141 only which controls the gate of MOSFET 21 with a driving current Ia which values is smaller than the driving current Ib value obtainable from the driver 142. This in turn determines that in the high side switch 21 a whole, flows a high side current HS_I with a first value, in the ON state at steady state, i.e., at regime, i.e., when the possible transients have settled;

After a variable delay tvd (applied by the delay circuit 142'), which, as indicated, is sensitive to the load current and the temperature, being controlled by the control current I_{LT}, the high side power MOSFET 21 is boosted with the maximum driver current capability, i.e., driven by both drivers 141 and 142, which are now both enabled by the command PWM_cmd after the delay tvd, with currents Ia and Ib, Ib being greater in value than Ia. This in turn determines that in the high side switch 21 as whole, flows a high side current HS_I with a second value, in the ON state at steady state t, which is greater than the first value, with driver 141 alone enabled. It is important to add an adaptive filter delay, i.e., modulate the variable delay t_{vd} as a function of the load current out of the output node SW and the temperature, since the high side power MOSFET 21 plateau is modulated by the load current and temperature as well. The variable delay t_{vd} is longer than the fixed delay t_{d}.

On the ON to OFF transition then the command PWM_CMD from the PWM logic changes from logical one to logical zero, thus the high side power MOSFET 21 is turned off with the maximum driver current capability, i.e., driven by both driver 141 and 142, which are both enabled.

After a fixed delay, the low side power MOSFET 22 is turned on with its maximum current capability, i.e. with a respective driver, not shown in figure 3, ensuring a current capability equivalent to the sum of drivers 141 and 142. In embodiments the size of the low side power MOSFET 22 may be different from the high side one 21 and so also the output current capability of its driver.

A relevant aspect is represented thus by the control the exchange of current between high side power MOSFET 21 and low side power MOSFET 22 during off/on transition and vice-versa with a variable filter, i.e. variable delay t_{vd}, sensitive to the load current and the temperature, i.e., with the circuit determining the delay control current I_{LT}, that allows to keep the optimization of the current exchange over the whole load current range.

The high side MOSFET 21 VGS plateau is proportional to the load current, thus the variable dead time t_{vd} must be increased when the load current increases in order to keep the correct timing to guarantee a smooth current exchange between the low side MOSFET 22 and high side MOSFET 21 to avoid emissions.

As indicated, such variable filter is implemented by using a replica of the error current Ierr, I_{FL}, that is proportional to load current, that is subtracted by a fixed current provided to the capacitance C , e.g., a replica or a scaled version of the current Ic (control loop variable). With this implementation the delay become proportional to the load current.

The drivers 141 and 142 are shown in figure 3 as supplied between a bootstrap voltage VBOOT and the output node SW, while the MOSFET 21 is coupled to a voltage VIN corresponding to the voltage V_{supply}. The supply arrangement may also correspond to the one shown in figure 1, however. A bootstrap circuit not shown supplies the bootstrap voltage VBOOT which is used to keep on the high side MOSFET 21. In the ON state the gate of the MOSFET 21 needs to be higher than the switching node voltage VSW that is equal to the battery voltage. So a bootstrap capacitor is used to generate a voltage higher than the input one during the ON state of the high side MOSFET 21.

Therefore, the circuit in figure 3 implements a control for the high side and low side drivers of a sync buck regulator with integrated power.

The control is performed in order to guarantee that the current transition is as much smooth as possible. In this way the current spikes visible on battery line are limited. Thus, the high frequency emissions are improved, and efficiency is kept high.

The high side driver FET 41 is split in two parallel drivers, one 141 with a smaller current capability (and a bigger one 142 with strong current capability), the dead time is defined by a variable delay tvd proportional to the load current.

The circuit allows choosing a better emission/efficiency trade-off respect to known solution by reducing emission and increasing efficiency over the whole load current range by proper driver commands synchronization and the variable delay proportional on load current.

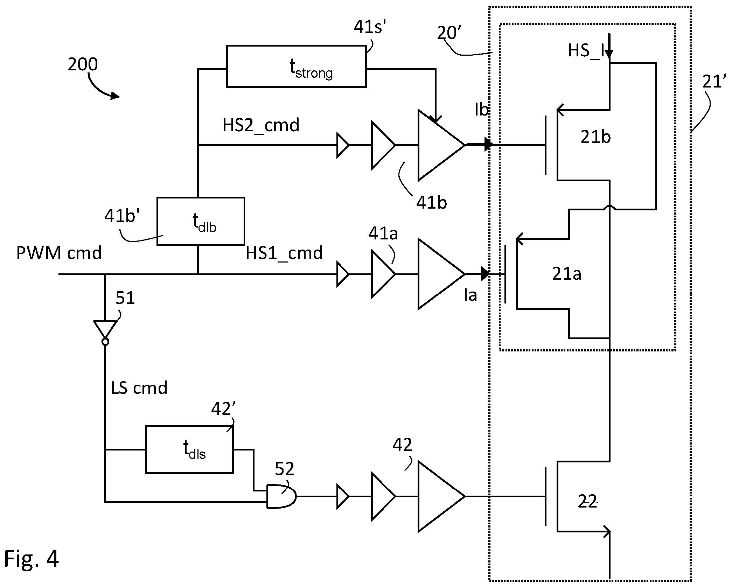

In figure 4 it is shown a second embodiment 200 of the solution, using driver paths on which different currents are conveyed, which also aims at controlling the exchange of current between high side and low side power MOSFET during the off/on transition and vice-versa, aiming to guarantee that the current transition is as smooth as possible. In this way the current spikes sunk from battery line are limited to a smooth current shape. Thus, the high frequency emissions are limited.

Also the regulator 200 is shown partially, however the low side switch 22 is shown here, while the feedback loop of figure 1, i.e. chain of components 32, 33, 35, 37, 43, from node FB to outputting the PWM command PWM_cmd is not shown, but the regulator 200 comprises such feedback chain or an equivalent loop.

As shown, in figure 4, in this case the high side switch MOSFET, indicated with 21 in figure 3, is MOSFET 21' split in two subs-switches, in particular two power MOSFETs in parallel, a first high side MOSFET 21a and a second high side MOSFET 21b, the first high side MOSFET 21a being smaller, i.e. having a lower current capability, e.g. with a lower aspect ratio, than the second MOSFET 21b, i.e. in the ON state the current flowing through MOSFET 21a at steady state is lower than the current flowing through MOSFET 21b. Each high side sub-switch, i.e. MOSFET 21a and 21b, is driven by a respective driver 41a and 41b. The PWM command PWM_CMD from the comparator 131 is sent to the second high side driver 41b with a fixed delay t_{dlb}, applied by a corresponding delay circuit 41b', resulting in a second high side signal HS2_cmd, and in parallel to the first driver 41a, i.e., without applying the fixed delay t_{dlb}, resulting in a first high side signal HS1_cmd for the driver 41a. Also, a strong current delay time t_{strong} is applied, through a delay circuit 41s', to control the time at which the second high side driver 41b is enabled to apply a further current, which value is bigger than the current applied by the driver 41b when enabled after the fixed delay t_{dlb}. As shown, the drivers, e.g. 41b, may comprises three stages in series and the strong current delay time t_{strong} enables the last and bigger. In variant embodiments, with suitable timing the gate source voltage of the MOSFET 21a may be sampled instead of using the fixed delay t_{dlb}, in particular when operating at lower frequencies.

The PWM command PWM_cmd is also sent, inverted by an inverter 51 to obtain a low side command LS CMD, to the driver 42 of the low side MOSFET 22. A low side delay time t_{dls} is applied, by a corresponding delay line or circuit 42', to the PWM command PWM_cmd and then put in AND (exemplified by the logic AND gate 52) with the not delayed PWM command PWM_cmd, the output of the AND gate 52 feeding the driver 42, so that the low side driver 42 switches on the low side MOSFET 22 only after the low side delay time t_{dls}.

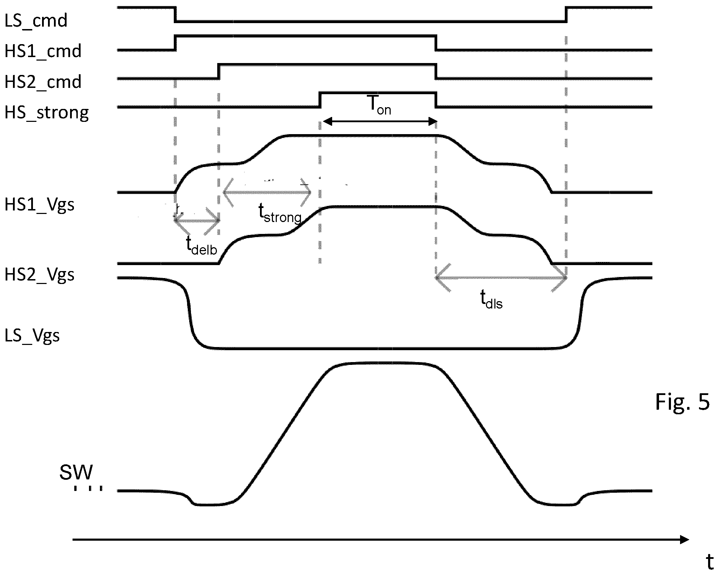

With reference to the time diagram of figure 5, which shows the following signals as a function of time t:
- the low side command LS_CMD
- the first high side command HS1_cmd for the first high side driver 41a
- the second high side command HS2_cmd for the second high side driver 41b;
- a strong current command HS_strong, which enables sending a strong current ;
- the first high side MOSFET 21a gate source voltage HS1_Vgs
- the second high side MOSFET 21b gate source voltage HS2_Vgs
- the low side MOS FET 42 gate source voltage LS_Vgs
- the voltage at the output node SW.

During the OFF to ON transition, first the low side MOSFET 22 is turned off very fast. Then the small high side MOS 21a is turned on. The high side current HS_I, which, as shown in figure 4, is the current flowing in the whole switch comprising both sub-switches 21a and 21b, in the on state at steady state is set at a first value; after the fixed delay t_{dlb}, applied by a delay circuit 41b', when the gate source voltage HS1_Vgs of the high side MOSFET 21a reaches the plateau, the bigger high side MOSFET 21b is turned on, with a fixed gate current to guarantee the desired slew rate of the switching node SW. The current depends on the gate capacitance of the power MOSFET that depends on technology and power MOS dimensions. The current is sized to obtain the desired Rise time on Switching node SW.

The high side current HS_I, which, as shown in figure 4, is the current flowing in the whole switch comprising both sub-switches 21a and 21b, in the on state at steady state is set at a second value, greater than the first, in particular since both sub-switches are enabled. After a fixed delay t_{strong}, applied by a delay circuit 41b', when the bigger second high side MOSFET 21b is almost fully on, the second high side driver 41b is driven to supply a strong current, i.e., greater than before, to keep both the high side MOSFETs 21a and 21b fully on during all the on time of the high side branch, i.e., Ton.

During the ON to OFF transition the high side MOS 21a and 21b are turned-off with a fixed gate current, which value determines the desired slew rate of the switching node. After a fixed delay, i.e. low side delay time t_{dls}, when both the high side MOS 21a and 21b are fully off, the low side MOS 22 is turned on very fast.

Also, by this embodiment, by implementing the described solution, it is possible to obtain a clean exchange of current between low side and high side FET minimizing the emissions caused by reverse recovery charge keeping a good efficiency.

The first high side MOSFET 41a control the current slew rate and its exchange between low side and high side defining the Dead Time duration. Slower is the exchange, lower are the emissions

The second high side MOSFET 42b control the voltage slew rate of the output node SW defining the Rise and Fall time, i.e. the time to rise from the end of the dead time t_{d} to the peak of the spike SP and the subsequent time to settle to constant level respectively.

As a result of the above timing scheme and solution, a clean current exchange between the low side and high side MOSFET is obtained. Also, ringing on the output switching node (e.g., SW) is prevented.

Thus, from the description above it is clear that the solution here described refers to a current controlled buck regulator circuit, e.g. the peak current controlled buck regulator 100 or 200,
comprising a half bridge, e.g., 20 or 20', comprising a high side switch, in the example 21 or 21', including 21a, 21b, and a low side switch 22, driven by a PWM signal PWM_cmd through respective drivers, e.g., 41, 42 or 141, 142, the regulator specifically comprising a pair of drivers , e.g., 41, 42 or 141, 142, both coupled to a given switch, in particular the high side switch, among said high side switch and low side switch to supply selectively, in particular the selection being performed by enablement at different times, a first driving current, e.g., Ia, and a second driving current, e.g., Ib, to said given switch, 21 or 21a, 21b, enabling selectively, in particular in time, said first) and/or second driving current, Ia, Ib, to supply a current switching on said given switch, 21 or 21a, 21b, the value of an ON current, e.g. the current HS_I when the high side switch is settled at the high level, passing through said given switch, 21 or 21a, 21b, at the switch-on depending on which of said first and/or second) driving current Ia, Iab is enabled,
a timing arrangement, comprising for instance delay circuits 141', 142' or 41b', 41s', 42', being configured during the switch-on of said given switch, 21 or 21a, 21b,, to enable said first Ia and/or second Ib driving current so that in said given switch, 21 or 21a, 21b, passes an ON current, e.g., HS_I, with a first value , then after a delay time enabling said first and/or second driving current Ia, Ib so that in said given switch, 21 or 21a, 21b, passes an ON current, for instance again HS_I, with a second value greater than said first value.

In embodiments, the regulator, e.g., the regulator 100, comprises that said pair of drivers, e.g., 41, 42, of the given switch, e.g. the switch 21, i.e. not split, comprises a first driver, e.g. 41, configured to supply a first driving current, e.g., Ia, to said given switch 21 which is smaller than said second driving current, e.g. Ib.

In this embodiment 100, in particular, the timing arrangement, e.g. 141', 142' comprises a circuit 141' configured to apply a fixed delay, e.g., t_{d}, to said first driving current, e.g. Ia, and a circuit 142' configured to apply a variable delay, t_{vd}, to the second driving current, Ib, longer than the fixed delay, e.g., t_{d}, and which value depends on a load current outputted at an output node, e.g., SW, of said half bridge 20 and on the temperature of the regulator circuit, e.g., regulator 100.

In this embodiment 100, also the circuit 142' configured to apply a variable delay, t_{vd}, to the second driving current, Ib, is configured to adjust said variable delay t_{vd}) as a function of a delay control current, e.g., I_{LT} which is proportional to a feedback current, I_{FL}, in particular a replica of an error current, Ierr, of the peak current control loop, depending from a load current outputted at a output node, e.g., SW, of said half bridge 20 and a current, e.g., I_{FT} depending from the temperature of the circuit, in particular determined by the value of a PTAT, Positive To Absolute Temperature, element. As mentioned, the error current, Ierr, of the peak current control loop is obtained by the voltage to current converter, e.g. 35, coupled to comparator, e.g., 31 of the outer loop of the PCMC control loop, in particular as described with reference to figure 1.

Also, in a further embodiment 200 of peak current controlled buck regulator circuit, the given switch, e.g. 21', comprises a first, 21a, and a second sub-switch, 21b, i.e. power MOSFETs, coupled respectively to the first driving current, Ia, and second driving current, Ib, said first, 21a, and second sub-switch, 21b, having different size, in particular different aspect ratio, in the ON state at steady state the current flowing through the first sub-switch, 21a, being greater than the current flowing through the second sub-switch, 21b.

According to a further aspect of such embodiment 200, the timing arrangement comprises a circuit 41b' configured to apply a delay t_{dlb}, i.e. fixed delay, to the second driving current, Ib, till the gate source voltage of the first sub-switch, 21a, reaches the Miller Plateau.

The Miller Plateau gate voltage depends on technology, power-MOSFET dimensions, temperature and load current. The circuit here described may not detect the Miller Plateau gate voltage, but it is determined a value of delay which allows reaching the Miller Plateau in typical or standard operating conditions, with respect in particular to temperature and load current. However, in embodiments a sensor further tracking the the variation of such Miller Plateau gate voltage versus temperature and load current may also be used to adjust the value of the delay t_{dlb}, i.e. fixed delay, to the second driving current, Ib, till the gate source voltage of the first sub-switch, 21a, gate source voltage reaches the Miller Plateau.

In the same way, the solution described corresponds to a method for controlling the regulator described with reference to figure 3 and 4 comprising enabling selectively said first and/or second driving current, Ia, Ib, to supply a switching current on said given switch, 21, or 21a, 21b, the value of an ON current HS_I passing through said given switch, 21, or 21a, 21b at the switch-on depending on which of said first Ia and/or second Ib driving current is enabled,
enabling, by the delay circuits, e.g. 141', 142', or 41s', 41b', 42', during the switch-on of said given switch , 21, or 21a, 21b , said first and/or second driving current, Ia, Ib, so that in said given switch, e.g., 21 or 21a, 21b, passes an ON current, for instance HS_I, with a first value , then after a delay time enabling said first and/or second driving current so that in said given switch, e.g., 21 or 21a, 21b, passes an ON current for instance HS_I, with a second value greater than said first value.

With reference to the first embodiment 100, the method may comprise supplying a first driving current, Ia, to said given switch, 21, or 21a, 21b, which is smaller than said second driving current, Ib, applying, 141', 142', a fixed delay, t_{d}, to said first driving current, Ia, and a variable delay, t_{vd}, to the second driving current, Ib, longer than the fixed delay, t_{d}, and which value depends on a load current outputted at a output node, e.g., SW, of said half bridge 20, and on the temperature of the regulator circuit, e.g. 100.

The method, with the circuit of embodiment 200, may comprise providing that in the on state at steady state the current flowing through the first sub-switch 21a is greater than the current flowing through the second sub-switch 21b. Also it may provide applying, by circuit 41b' for instance, a delay, t_{dlb}, to the second driving current, Ib, till the gate source voltage of the first sub-switch, 21a, reaches the Miller Plateau, said second driving current, Ib, being in particular applied as fixed gate current. Also, after a further delay, t_{strong}, it is performed an activation of a further driving current with a value greater than said second driving current Ib, i.e., a strong current, after that the current flowing in the given switch, e.g. 21', comprising a first 21a and a second sub-switch 21b, reaches the ON level, e.g. the high logic level.

From the description here above thus the advantages of the solution described are clear.

Advantageously, the solution described allows choosing a better emission/efficiency trade-off respect to known solution by reducing emission and increasing efficiency, through the described driver commands timing and synchronization.

In embodiments, the proposed solution allows to reduce the emissions on the input voltage generated by a buck dc-dc converter, by controlling the drivers of power MOSFETs in order to guarantee that no current spikes occur during LS/HS transitions

Without prejudice to the underlying principles, the details and embodiments may vary, even significantly, with respect to what has been described by way of example only, without departing from the extent of protection.

It is clear that although the solution has been described with reference to the high side switch, the given switch coupled to a pair of drivers to supply selectively a first driving current and a second driving current to said given switch may also correspond in embodiments to the low side switch.

Also, the solution here described applies not only to a peak current controlled buck regulator circuit, but also to other current controlled modes, for instance a Valley Current Mode Control Buck regulator, i.e. the current controlled mode may operate either on the peak or the valley, i.e. relative maxima and minima, of the current at the output of the regulator.

The extent of protection is defined by the annexed claims.

## Claims

1. A current controlled buck regulator (10; 100; 200) circuit, in particular peak current controlled, comprising a half bridge (20; 20') comprising a high side switch (21; 21a, 21b) and a low side switch (22), driven by a PWM signal (PWM_cmd) through respective drivers (41, 42; 141, 142),
comprising a pair of drivers (41, 42; 141, 142) both coupled to a given switch among said high side switch (21; 21a, 21b) and low side switch (22) to supply selectively a first driving current (Ia) and a second driving current (Ib) to said given switch (21; 21a, 21b), enabling selectively said first (Ia) and/or second (Ib) driving current to supply a current switching on said given switch (21; 21a, 21b), the value of an ON current (HS_I) passing through said given switch (21; 21a, 21b) at the switch-on depending on which of said first (Ia) and/or second (Ib) driving current is enabled,
a timing arrangement (141', 142'; 41b', 41s', 42') being configured during the switch-on of said switch (21; 21a, 21b), to enable said first (Ia) and/or second (Ib) driving current so that in said given switch (21; 21a, 21b) passes an ON current (HS_I) with a first value , then after a delay time enabling said first and/or second driving current so that in said given switch (21; 21a, 21b) passes an ON current (HS_I) with a second value greater than said first value.

2. A current controlled buck regulator circuit (100) according to claim 1, wherein said pair of drivers (41, 42) of the given switch (21; 21a, 21b) comprises a first driver (41) configured to supply a first driving current (Ia) to said given switch (21; 21a, 21b) which is smaller than said second driving current (Ib).

3. A current controlled buck regulator circuit (100) according to claim 1 or 2, wherein said timing arrangement (141', 142') comprises a circuit (141') configured to apply a fixed delay (t_{d}) to said first driving current (Ia) and a circuit (142') configured to apply a variable delay (t_{vd}) to the second driving current (Ib), longer than the fixed delay (t_{d}) and which value depends on a load current outputted at a output node (SW) of said half bridge (20; 20') and on the temperature of the regulator circuit.

4. A current controlled buck regulator circuit (100) according to claim 2 or 3, wherein said circuit (142') configured to apply a variable delay (t_{vd}) is configured to adjust said variable delay (t_{vd}) as a function of a delay control current (I_{LT}) which is proportional to a feedback current (I_{FL}), in particular a replica of an error current (Ierr) of a current control, in particular peak current control, depending from a load current outputted at a output node (SW) of said half bridge (20; 20') and a current (I_{FT}) depending from the temperature of the circuit, in particular determined by the value of a PTAT, Positive To Absolute Temperature, element.

5. A current controlled buck regulator circuit (100) according to claim 3, wherein the buck regulator comprises an error-amplifier (33) which output (Verr) is converted (35) to a current error (Ierr) in function of which the PWM command (PWM_cmd) for actuation of the high side and low side divers of said half bridge (20; 20') is generated (31, 43), said feedback current (I_{FL}) being a replica of said error current (Ierr).

6. A current controlled buck regulator circuit (200) according to claim 1, wherein said given switch (21; 21a, 21b) comprises a first (21a) and a second sub-switch (21b) coupled respectively to the first driving current (Ia) and second driving current (Ib), said first (21a) and second sub-switch (21b) having different size, in particular different aspect ratio, in the on state at steady state the current flowing through the first sub-switch (21a) being greater than the current flowing through the second sub-switch (21b).

7. A current controlled buck regulator circuit (200) according to claim 6, wherein said timing arrangement comprises a circuit (41b') configured to apply a delay (t_{dlb}) to the second driving current (Ib) till the gate source voltage of the first sub-switch (21a) reaches the Miller Plateau, said second driving current (Ib) being in particular applied as fixed gate current.

8. A current controlled buck regulator circuit (200) according to claim 6 or 7, wherein said timing arrangement comprises a further circuit (41s') configured to apply a delay (t_{strong}) to the activation of a further driving current with a value greater than said the second driving current (Ib) after said delay (t_{dlb}), to the second driving current (Ib) till the gate source voltage of the first sub-switch (21a) reaches the Miller Plateau.

9. A current controlled buck regulator circuit (200) according to any of claims 1 to 8, wherein the given switch is high side switch.

10. A method for controlling a current controlled buck regulator circuit (10; 100; 200) of any of claims 1 to 9,
comprising enabling selectively said first (Ia) and/or second (Ib) driving current to supply a current switching on said given switch (21; 21a, 21b), the value of an ON current (HS_I) passing through said given switch (21; 21a, 21b) at the switch-on depending on which of said first (Ia) and/or second (Ib) driving current is enabled,
enabling (141', 142'; 41s', 41b', 42') during the switch-on of said switch (21; 21a, 21b said first (Ia) and/or second (Ib) driving current so that in said given switch (21; 21a, 21b) passes an ON current (HS_I) with a first value, then after a delay time enabling said first and/or second driving current so that in said given switch (21; 21a, 21b) passes an ON current (HS_I) with a second value greater than said first value.

11. A method according to claim 10, comprising supplying a first driving current (Ia) to said given switch (21; 21a, 21b) which is smaller than said second driving current (Ib), applying (141', 142') a fixed delay (t_{d}) to said first driving current (Ia) and a variable delay (t_{vd}) to the second driving current (Ib), longer than the fixed delay (t_{d}) and which value depends on a load current outputted at a output node (SW) of said half bridge (20; 20') and on the temperature of the regulator circuit (100).

12. A method according to claim 10 or 11, comprising,
during the OFF to ON transition of said given switch, turning the off the other switch (22) in the half bridge, and, after said fixed delay (t_{d}), turning on said given switch (21) with said first driving current (Ia) which value is smaller than the second driving current (Ib) value, determining flowing in the given switch 21 a current (HS_I) with a first value, in the ON state at steady state;
after said variable delay (t_{vd}), which is function of the load current of the half bridge and of the temperature of the circuit, driving with both driving currents (Ia, Ib) the given switch (21), determining flowing in the given switch (21) a current (HS_I) with a second value, in the ON state at steady state t, which is greater than said first value.

13. A method according to claim 10, comprising providing as said given switch (21; 21a, 21b) a switch comprising a first (21a) and a second sub-switch (21b) coupled respectively to the first driving current (Ia) and second driving current (Ib), said first (21a) and second sub-switch (21b) having different size, in particular different aspect ratio, in the on state at steady state the current flowing through the first sub-switch (21a) being greater than the current flowing through the second sub-switch (21b).

14. A method according to claim 13, comprising applying (41b') a delay (t_{dlb}) to the second driving current (Ib) till the gate source voltage of the first sub-switch (21a) reaches the Miller Plateau, said second driving current (Ib) being in particular applied as fixed gate current.

15. A method according to claim 14, comprising applying a further delay (t_{strong}) to the activation of a further driving current with a value greater than said second driving current (Ib) after the current flowing in the switch comprising a first (21a) and a second sub-switch (21b) reaches the ON level.
